# EUROPEAN PATENT APPLICATION

(11) **EP 1 452 839 A2**
(43) Date of publication of application: **01.09.2004**
(21) Application number: 04251102.2
(22) Date of filing: 26.02.2004
(51) Int. Cl.: G01F 23/04

(54) **Oil level measurement apparatus**

(30) Priority: 26.02.2003 GB 0304376
(71) Applicant: Nissan Technical Center Europe Ltd, Bedforshire MK43 0DB (GB)
(72) Inventor: Palomo, Angel, c/o Nissan Technical Centre EU S.A., S/n, 28044 Madrid (ES); Trapero, Fernando, c/o Nissan Technical Centre, S/n, 28044 Madrid (ES)
(74) Representative: Hopley, Joanne Selina

(57) **Abstract**

An oil level measurement apparatus for use in an internal combustion engine includes an oil level measuring device (10), or dipstick, and guide means including a guide member (18) for aiding insertion of the measuring device (10) into the oil reservoir (12). The guide member (18) includes a flared opening into which a measurement end (10a) of the measuring device (10) is inserted. The measuring device (10) is provided with one or more annular members (26), preferably integrally formed therewith, which is co-operable with an internal surface of the guide member (18) so as to aid prevention of the ingress of fluid and/or particulate matter through the guide means (18) into a reservoir (12) of the engine.

## Description

The invention relates to an oil level measurement apparatus for use in an internal combustion engine, and in particular of the type comprising guide means to aid a user in insertion of an oil measuring device into an oil reservoir or sump. The invention also relates to guide means and an oil level measuring device being component parts of said oil level measurement apparatus.

It is generally well known to provide the oil sump or reservoir of an engine with an oil level measurement apparatus including an elongate metal dipstick for measuring the depth or level of oil within the reservoir. Generally the vehicle user is required to carry out an oil check periodically and it is recognised that this is a crucial aspect of engine maintenance. In particular, failure to detect a below-recommended oil level can result in excessive wear leading to engine failure. It is therefore desirable to enable the oil level measurement to be carried out both quickly and frequently and with ease.

It is known for the dipstick to be received within an opening of the oil reservoir, most commonly a separate opening from the oil-fill opening. In order to measure the oil level within the reservoir it is necessary to first remove the dipstick from the opening and to wipe it clean, and to then replace it in the opening so that a measurement end of the dipstick extends into the reservoir. Removal of the dipstick from the reservoir then provides the user with a visual measurement of the oil level. When the oil level measurement is complete the dipstick is re-inserted into the opening, so that during normal engine operation the measurement end of the dipstick sits within the reservoir.

It is a recognised problem with known dipstick apparatus that the insertion of the dipstick into the opening of the reservoir is difficult to achieve. Partly this is due to the flexing of the long metal dipstick during the insertion process, and partly due to the often inaccessible location of the reservoir opening. This is a particular problem in engines of relatively large size and therefore depth, as the reservoir is usually situated well beneath the top of the engine and a dipstick of particularly long length is required. It is a further problem with known dipstick apparatus that particulate debris within the engine and/or fluids (e.g. water) are often able to enter the oil reservoir through the apparatus, thus causing unwanted contamination of oil.

Several different techniques have been proposed for improving the ease with which known oil level measurement apparatus can be used, particularly with a view to aiding insertion of the dipstick into the opening of the reservoir. For example, it is known to provide an oil depth measuring apparatus in which the oil dipstick is fitted with a removable guide tube to aid the user in locating the end of the dipstick within the reservoir opening. Once the dipstick has been inserted into its in-reservoir measurement position the guide tube is removed out of the insertion position. It is a disadvantage of this arrangement, however, that the user must remove the guide tube from the dipstick in order to return the dipstick to a position for normal engine operation and the requirement for the extra guide component always to be readily available for measurement purposes is inconvenient. US 4155167 describes an oil measuring apparatus of this type.

It has also been proposed to mount a spring biased guide tube on the oil reservoir housing, for example as described in US 4894935, and to provide illumination means for activation when the dipstick is out of its normal operating position to aid the user in re-inserting the dipstick into the reservoir opening.

There is, however, an ever-increasing requirement in the automotive industry to reduce the cost and complexity of engine systems, and current known solutions for improving the ease of use of a dipstick apparatus are not considered cost effective. It is one object of the present invention to provide an oil level measurement apparatus that addresses this problem, whilst providing the user with benefits in terms of ease of use. It is a further object of the invention to provide an oil level measurement apparatus in which contamination of the oil reservoir through the apparatus is substantially avoided.

According to a first aspect of the present invention, there is provided
an oil level measurement apparatus for use in an internal combustion engine having an oil reservoir and an oil reservoir housing, the oil level measurement apparatus including:
a measuring device, and
guide means including a guide member for guiding insertion of the measuring device into the oil reservoir, said guide member including a flared opening into which a measurement end of the measuring device is inserted,
wherein the measuring device is provided with one or more annular members co-operable with an internal surface of the guide member to aid prevention of the ingress of fluid and/or particulate matter through the guide means into the reservoir.

The provision of the or each annular member is advantageous in that it reduces or substantially removes the risk of fluid and/or particulate matter passing through the guide means, which may otherwise contaminate oil within the reservoir.

The guide member preferably defines an internal guide chamber, and wherein the or each annular member is located within the guide chamber when the measuring device is received within the reservoir in an oil level measuring position in which the measurement end of the device locates within the reservoir. With the measuring device in this position, the or each annular member cooperates with the internal surface of the guide member so as to prevent the aforementioned unwanted fluid and/or particulate matter ingress.

Preferably the or each annular member is cooperable with the internal surface of the guide member through an interference fit, and the annular members are preferably relatively flexible.

The guide means preferably also includes catch means co-operable with an oil reservoir housing to locate the guide means permanently within the engine.
The guide means is conveniently fixed to the oil reservoir housing during manufacture so that it is substantially immovable once in position, other than by causing damage. For the purpose of this specification reference to 'permanent' securing, fixing or location of the guide means to the oil reservoir housing is intended to mean that removal of the guide means cannot be effected without damage being caused to the component(s).

The oil measuring device may take the form of an "oil dipstick". It is known in conventional dipstick apparatus to press-fit an elongate metal tube into an opening in the oil reservoir housing, and it is into this metal tube that a conventional metal dipstick is inserted for measurement purposes. In the present invention, the guide means is conveniently mounted partly within an opening of the reservoir, which opening would usually receive the press-fitted metal tube in a conventional apparatus. No modification of the oil reservoir housing is therefore necessary.

The guide means preferably includes a funnel-shaped, or 'tapered', guide member which defines the flared opening and has an internal tapered surface. The internal tapered surface defines the guide surface for the measurement end as it is inserted into the apparatus and also defines an internal surface of the guide chamber. The enlarged flared opening of the guide member aids the user both in visually locating the reservoir opening when it is required to insert the oil measuring device into it.

Preferably, the guide member has an entry portion which defines the flared opening and a body portion, internal surfaces of the entry and body portions together defining a continuous guide surface for the oil measurement device during insertion into the oil reservoir. Preferably, the entry portion of the guide member is of substantially frusto-conical form.

As the ease with which the measuring device, or dipstick, can be inserted into the reservoir opening is improved by the provision of the guide member, the common requirement for flexibility of the dipstick is avoided. As the dipstick can therefore be made relatively inflexible it may be formed from a plastic material. The cost of the dipstick is therefore reduced compared to dipsticks that are formed from metal. In addition, a further cost saving is enabled in that the dipstick can be made shorter than conventional dipsticks.

In a further preferred embodiment the guide means is also formed from a plastic material, therefore providing a further cost benefit for the apparatus.

In a particularly preferred embodiment the annular members are formed from a plastic material and can thus be integral with the plastic measuring device.

It is preferable to provide two or more annular members, axially spaced along the measuring device axis. Preferably, the diameter of each annular member differs from that of the or each of the other annular members so as to ensure each annular member cooperates in an interference fit with a cooperable portion of the continuous guide surface. The annular members are thus preferably arranged along the measuring device axis such that the diameters of neighbouring annular members gradually reduce towards the measurement end of the device.

In one preferred embodiment the guide means further includes resilient catch means for co-operation with the oil reservoir housing.

In a further preferred embodiment the resilient catch means includes one or more flexible arms or axial extensions, each arm being provided with a laterally extending catch or flange. Preferably two or more arms are provided.

The arms are flexible between a flexed state adopted during an insertion stage of assembly of the apparatus, in which the arms are caused to be flexed towards one another due to co-operation with an internal surface the reservoir opening as the guide member is inserted therein, and a natural state adopted during both an initial assembly stage of the apparatus and a final assembled stage of the apparatus in which the resilience of the arms causes them to be urged radially outward from one another. During the final assembled stage of the apparatus with the arms in their natural state, the catches of the arms are caused to engage with an internal surface of the reservoir to locate the guide member securely and permanently within the reservoir opening.

In a still further preferred embodiment the measuring device is provided with additional cover means to further aid prevention of the ingress of particulate matter and/or fluid into the reservoir through said guide means. In addition to the annular members, an additional cover or lid is thus provided.

The cover means may include an additional annular collar carried by or integrally formed with the measuring device and arranged for engagement with the guide means in the region of the opening, at an upper end of the guide member, when the apparatus is assembled and during normal operation of the engine (i.e. other than during measurement).

The apparatus may also include seal means for further preventing the ingress of particulate matter and/or fluid through the guide means. Said seal means may include a circumferential groove provided in the outer surface of the measuring device for location of a first seal member.

In a further preferred embodiment additional seal means are also provided for substantially preventing the ingress of fluid and/or particulate matter into the reservoir between the guide means and the reservoir opening. For example a second seal member may be located within a circumferential groove provided in the outer surface of the guide member.

The first and second seal members may be located at approximately the same position along the measuring device axis (i.e. substantially concentric to one another), or alternatively may be located at different axial positions (i.e. not concentric).

It is also preferable to provide the guide means with an aperture to define a drain for any fluid within the guide means, for example condensation or fluid that enters the guide means in exceptional circumstances such as when driving the associated vehicle through flood water.

According to a second aspect of the present invention, there is provided an oil level measurement apparatus for use in an internal combustion engine having an oil reservoir and an oil reservoir housing, the oil level measurement apparatus including:
an oil level measuring device, and
guide means including a guide member for guiding insertion of the measurement device into the oil reservoir and catch means co-operable with the oil reservoir housing to secure the guide member permanently within the engine, wherein the guide member includes a flared opening into which a measurement end of the measuring device is inserted, in use.

Preferably, the measuring device is provided with one or more annular members co-operable with the guide means to aid prevention of the ingress of fluid and/or particulate matter through the guide means into the reservoir.

According to a third aspect of the present invention, there is provided a measuring device for use in an oil level measurement apparatus as herein described, wherein the measuring device is provided with one or more annular members for aiding prevention of the ingress of fluid and/or particulate matter through the guide means into the reservoir.

According to a fourth aspect of the present invention, there is provided a guide means for use in an oil level measurement apparatus as herein described, wherein the guide means includes a flared opening into which a measurement end of a measuring device is inserted, in use, and catch means co-operable with an oil reservoir housing to locate the guide member permanently within the engine.

It will be appreciated that the preferred and/or optional features of the first aspect of the invention may be incorporated, where appropriate, in the second, third and fourth aspects of the invention also.

The invention will now be described, by way of example only, with reference to the accompanying drawings in which:
Figure 1 is a front sectional view of an oil measurement apparatus in accordance with a first embodiment of the invention,
Figure 2 is a side sectional view of the oil measurement apparatus in Figure 1,
Figure 3 is a perspective view of guide means of the oil measurement apparatus in Figures 1 and 2, and
Figure 4 is a front sectional view of an alternative embodiment of the oil measurement apparatus to that shown in Figures 1 to 3.

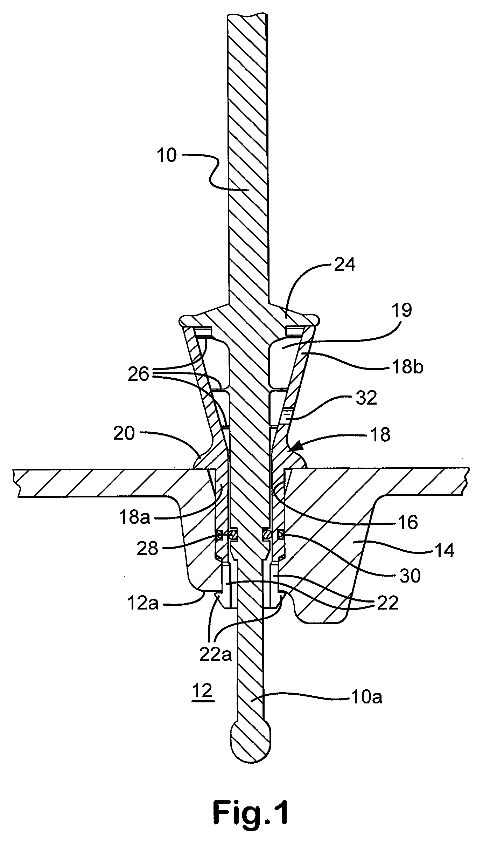

Figure 1 shows an oil level measurement apparatus including an oil level measurement device 10, commonly referred to as an oil dipstick, having a measurement end 10a for insertion into an oil reservoir or sump 12 defined within a housing 14 (shown in part). The oil reservoir housing 14 is provided with a generally cylindrical opening 16 within which guide means for the dipstick 10 is received. Conveniently, the opening 16 in the reservoir housing 14 need not be altered from known oil housing designs in which a metal tube, into which a metal dipstick is inserted for measurement purposes, is received within the reservoir opening 16.

The guide means includes a hollow guide member 18 having a lower body portion 18a and an upper entry portion 18b. The body portion 18a of the guide member 18 is of generally tubular form and has an outer cylindrical surface that co-operates with the internal cylindrical surface of the opening 16 in the reservoir housing 14. The entry portion 18b of the guide member 18 is of substantially frusto-conical form, or is flared, to define a flared opening of the guide member 18 having an enlarged diameter compared to that of the reservoir opening 16. The entry portion 18b of the guide member thus has a tapered internal surface defining an internal guide member chamber 19. The tapered internal surface of the guide member 18 also defines, together with the internal surface of the body portion 18a, a continuous guide surface for the dipstick 10 during insertion thereof into the reservoir 12 either for measurement or re-assembly purposes as described further below.

The guide member 18 is provided with an annular collar 20 in the region intermediate the upper and lower body portions 18b, 18a, an under-surface of the annular collar 20 being shaped for engagement with an upper surface of the reservoir housing 14.

As described in further detail below, it is one of the advantages of the present invention that both the guide member 18 and the dipstick 10 may be formed from a plastic material, therefore reducing appreciably the cost of the apparatus compared to that known in the art.

The opening 16 provided in the reservoir housing 14 is stepped part way along its axial length to define an upper region of enlarged diameter and a lower region of reduced diameter. The lower end of the guide member body portion 18a is provided with resilient catch means in the form of four flexible arms 22 (only two of which are visible in the section shown in Figure 1) extending generally axially beneath the guide member 18. Each of the arms terminates at its lower end with a flange 22a for catched engagement with an internal surface 12a of the reservoir 12 when the guide member 18 is fully received within the opening 16.

The dipstick 10 is provided with cover means including an annular collar 24 that, in the position shown in Figure 1, is seated on the upper surface of the flared opening defined by the entry portion 18b of the guide member 18. The dipstick 10 also includes means for aiding prevention of the ingress of fluid and/or particulate matter into the reservoir 12 through the guide member 18, between its internal guide surface and the outer surface of the dipstick 10. Said prevention means includes one or more (three in the embodiment shown) annular or disc-like members 26 axially spaced along the axis of the dipstick 10 and preferably integrally formed therewith. Each annular member 26 has a diameter differing from that of the other members 26 so that, when the dipstick 10 is inserted into the guide member 18 and the reservoir 12, the members 26 are axially spaced along the dipstick 10, within the guide member chamber 19, such that the diameters of neighbouring members 26 gradually reduce towards the measurement end 10a of the dipstick 10. The diameter of each annular member 26 is selected so as to form an interference fit with the cooperable or adjacent region of the tapered internal surface of the guide member entry portion 18b when the dipstick 10 is received therein. The annular members 26 are relatively thin, and being formed from a plastic material have a degree of flexibility to ensure the required interference fit is achieved with the adjacent portion of the internal surface of the guide member 18. The annular members 26 are particularly advantageous as they substantially prevent the ingress of dust, debris and/or fluid through the guide member chamber 19 and, hence, through the guide member 18 into the oil reservoir 12.

The dipstick 10 is also provided with seal means in the form of a circumferential groove (not identified for clarity) formed in the outer surface of the dipstick 10 that locates a first seal member 28, typically in the form of an O-ring seal. The O-ring seal provides a means for further preventing the ingress of fluid to the reservoir 12 through the guide member 18. The guide member 18 itself is also provided with additional seal means for preventing the ingress of fluid to the reservoir 12 between the guide member 18 and the internal surface of the opening 16. The additional seal means is provided by a circumferential groove (not identified for clarity) formed in the lower body portion 18a of the guide member 18 which serves to locate a second seal member 30, typically in the form of an O-ring seal. The grooves in the guide member 18 and the dipstick 10 are located so that the first and second seal members 28, 30 are substantially concentric with one another.

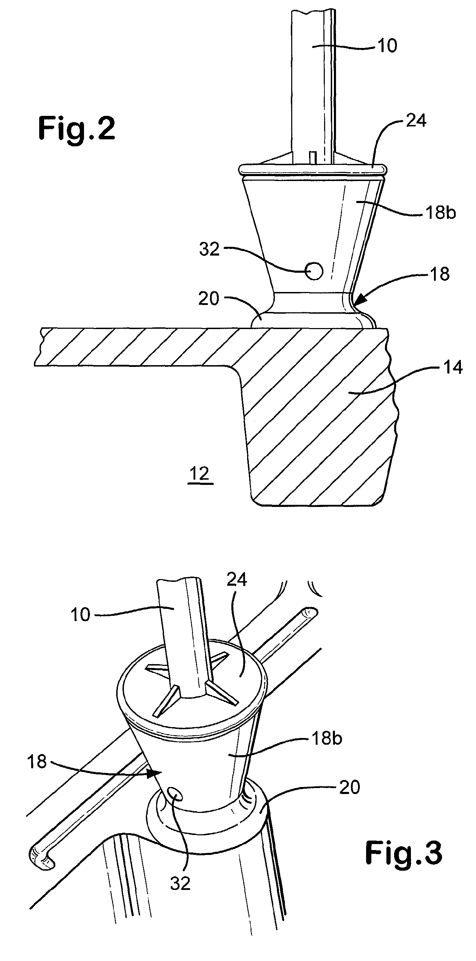

As can be seen in the views shown in Figures 2 and 3, the wall of the entry portion 18b of the guide member 18 is provided with a drain aperture 32 so that any fluid that circumvents the cover means 24 and/or the annular members 26 and passes into the guide member 18 during exceptional circumstances is able to drain from the guide member 18, rather than passing onward into the reservoir 12. Such circumstances may be encountered, for example, if the associated vehicle is passing through high level water (e.g. flood conditions). The drain aperture 32 also permits any water condensation within the guide member 18 to drain from the apparatus.

In order to assemble the apparatus, the lower body portion 18a of the guide member 18 is initially inserted into the reservoir opening 16. The diameter of the lowermost end of the guide member 18, as defined by the flanges 22a of the arms 22, is greater than that of the lower region of the opening 16. During this initial assembly stage of the apparatus, with the guide member 18 only inserted part way into the opening 16, the arms 22 adopt a natural state or condition. As the guide member 18 is inserted further into the opening 16 so that the arms 22 are brought into contact with the lower region of the opening 16, the flexibility of the arms 22 causes them to be urged radially towards one another, thereby narrowing the overall diameter of the guide member 18 and permitting its full insertion through the lower region of the opening 16 into the volume of the reservoir 12.

When the guide member 18 is fully received within the opening 16, with the collar 20 in engagement with the housing 14, the resilience of the arms 22 causes them to flex back into their natural condition, thereby causing the flanges 22a to co-operate or catchedly engage with the internal surface 12a of the reservoir 12 so as to fix the guide member 18 securely in position. It will be appreciated that this assembly procedure need only be repeated once, and that the guide member 18 therefore forms a permanent feature of the engine. Should replacement of the guide member 18 be necessary it must be removed by breaking the upper entry end 18a from the body portion 18b, and then removing the main drain plug (not shown) from the oil reservoir 12 to retrieve the remainder of the guide member parts, for example the arms.

In order to measure the oil level within the reservoir 12, the dipstick 10 is initially removed from the oil reservoir 12, wiped clean, re-inserted fully into the reservoir 12 to contact the oil level and then removed again for the user to visually measure the oil level. When the measurement is complete the dipstick 10 is once again re-inserted fully into the reservoir 12 into its normal position for engine operation. By virtue of the enlarged flared opening of the guide member 18 at its entry end 18b, the user is provided with a visual aid to locate the reservoir opening 16 which, often adopting a low position within the engine, can be difficult to see. Furthermore, the tapered internal surface of the entry portion 18b of the guide member 18, being continuous with the inner surface of the body portion 18a of the guide member 18, defines a continuous guide surface for the dipstick 10 to aid insertion thereof into the reservoir 12 once the dipstick 10 is directed to the approximate location of the reservoir opening 16.

Although not shown in the accompanying drawings, at its uppermost end remote from the measurement end 10a, the dipstick is conveniently provided with a handle to enable the user to manoeuvre the dipstick. The handle is shaped for co-operation with a fastener mounted upon an engine housing, typically a so-called "omega fastener", that serves to angularly locate the dipstick in a position within the reservoir where it remains during normal engine operation (i.e. other than during oil level measurement).

One benefit of improving the ease with which the dipstick 10 can be inserted into the reservoir opening 16 is that the dipstick 10 can be made relatively rigid and, thus, can be formed from a cheaper material than metal, for example a plastic material. In a conventional dipstick apparatus, where visually locating the reservoir opening and insertion of the dipstick is difficult to achieve, it is important to ensure the dipstick has a reasonable degree of flexibility. It is for this reason, partly, that metal dipsticks are common place. By removing the requirement for flexibility, the dipstick 10 used in the present invention can be made from a plastic material, therefore reducing the overall cost of the apparatus. It is also therefore possible to reduce the length of the dipstick 10, compared to conventional metal dipsticks, thus providing a further material cost saving.

In the preferred embodiment of the present invention, in which the annular or disc-like members 26 are formed integrally with the dipstick 10, it is further advantageous for a plastic dipstick to be used as this provides the annular members 26 with the required degree of flexibility to form an interference fit with the guide member 18. It will be appreciated however that the present invention provides an advantage over the known dipstick apparatus even if the dipstick or parts thereof are formed from a metal.

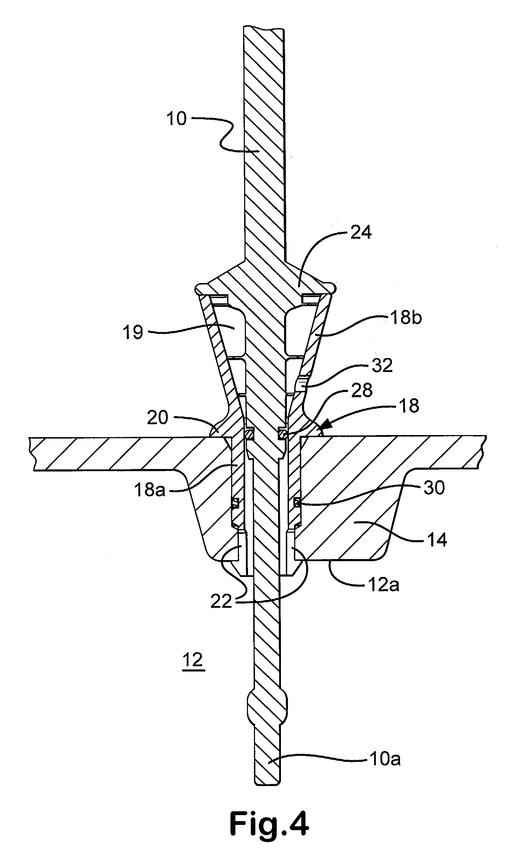

In the embodiment of Figure 3, the first and second seal members 28, 30 are located at approximately equivalent positions along the axis of the dipstick 10 (i.e. concentric with one another). One disadvantage of this, however, is the increased radial loading on the relatively thin wall region of the guide member 18 from both the first and second seal members 28, 30. In an alternative embodiment, as shown in Figure 4, the first and second seal members 28, 30 are located at different positions along the dipstick axis, the benefit of this embodiment being that radial loading of the relatively thin wall of the guide member 18 in the region of the first seal member 28 is reduced.

## Claims

1. An oil level measurement apparatus for use in an internal combustion engine having an oil reservoir (12) and an oil reservoir housing (14), the oil level measurement apparatus including:
an oil level measuring device (10), and
guide means including a guide member (18) for guiding insertion of the measuring device (10) into the oil reservoir (12), said guide member (18) including a flared opening into which a measurement end (10a) of the measuring device (10) is inserted, wherein the measuring device (10) is provided with one or more annular members (26) which are co-operable with an internal surface of the guide member (18) so as to aid prevention of the ingress of fluid and/or particulate matter through the guide means (18) into the reservoir (12).

2. The apparatus as claimed in claim 1, wherein the or each annular member (26) is cooperable with the internal surface of the guide member (18) through an interference fit.

3. The apparatus as claimed in claim 1 or claim 2, wherein the guide means (18) defines an internal guide chamber (19), and wherein the or each annular member (26) is located within the internal guide chamber (19) when the measuring device (10) is received within the guide means (18) in an oil level measuring position.

4. The apparatus as claimed in any one of claims 1 to 3, wherein the or each annular member (26) is relatively flexible.

5. The apparatus as claimed in any one of claims 1 to 4, wherein the guide means (18) further includes catch means (22a) co-operable with an oil reservoir housing (14) so as to locate the guide means (18) permanently within the engine.

6. The apparatus as claimed in claim 5, wherein the guide means (18) includes resilient catch means (22, 22a) for co-operation with the oil reservoir housing (14).

7. The apparatus as claimed in claim 6, wherein the resilient catch means includes one or more downwardly depending flexible arm (22), each arm being provided with a laterally extending flange (22a) for catched engagement with the reservoir housing (14).

8. The apparatus as claimed in any one of claims 1 to 7, wherein the guide member (18) has an entry portion (18b) which defines the flared opening and a body portion (18a), respective internal surfaces of the entry and body portions (18a, 18b) together defining a continuous internal guide surface for the measuring device (10) during insertion into the reservoir (12).

9. The apparatus as claimed in claim 8, comprising two or more annular members (26), wherein each annular member (26) has a diameter differing from that of the or each of the other annular members (26) so as to ensure each annular member (26) cooperates in an interference fit with a corresponding portion of the continuous internal guide surface.

10. The apparatus as claimed in any one of claims 1 to 9, wherein the oil measuring device (10) is relatively inflexible and is preferably formed from a plastic material.

11. The apparatus as claimed in any one of claims 1 to 10, wherein the guide means (18) is formed from a plastic material.

12. The apparatus as claimed in any one of claims 1 to 11, wherein the or each annular member (26) is integrally formed with the oil measuring device (10).

13. The apparatus as claimed in any one of claims 1 to 12, wherein the measuring device (10) is provided with additional cover means (20) to further aid prevention of the ingress of particulate matter and/or fluid into the reservoir through said guide means (18).

14. The apparatus as claimed in claim 13, wherein the cover means includes an additional annular collar (20) carried by or integrally formed with the measuring device (10) and arranged for engagement with the guide means (18) in the region of the flared opening.

15. The apparatus as claimed in any one of claims 1 to 14, including seal means (28, 30) for preventing further the ingress of particulate matter and/or fluid through the guide means (18).

16. The apparatus as claimed in claim 15, wherein said seal means includes a circumferential groove provided in the outer surface of the measuring device (10) for location of a first seal member (28).

17. The apparatus as claimed in any one of claims 1 to 16, comprising additional seal means (30) for substantially preventing the ingress of fluid and/or particulate matter into the reservoir (12) between the guide means (18 ) and the reservoir opening (16).

18. The apparatus as claimed in claim 17, including a second seal member (30) located within a circumferential groove provided in an outer surface of the guide member (18).

19. The apparatus as claimed in any one of claims 1 to 18, wherein the guide means (18) is provided with an aperture (32) to define a drain for any fluid within the guide means (18).

20. An oil measuring device (10) for use in the oil level measurement apparatus as claimed in any one of claims 1 to 19, wherein the oil measuring device (10) is relatively inflexible and is provided with said one or more annular members (26).

21. A guide means (18) for use in an oil level measurement apparatus as claimed in any one of claims 1 to 19, the guide means (18) including a guide member (18) having a flared opening into which a measurement end of an oil measuring device (10) is inserted, in use, and catch means (22, 22a) co-operable with an oil reservoir housing (14) to locate the guide means (18) permanently within the engine.
